# EUROPEAN PATENT APPLICATION

(11) **EP 4 227 280 A1**
(43) Date of publication of application: **16.08.2023**
(21) Application number: 21877318.2
(22) Date of filing: 14.09.2021
(51) Int. Cl.: C03C 27/12, B32B 7/023, B32B 17/10, B60J 1/00, B60J 1/02

(54) **LAMINATED GLASS**

(30) Priority: 05.10.2020 JP 2020168527
(71) Applicant: AGC INC., Chiyoda-ku, Tokyo 1008405 (JP)
(72) Inventor: MITSUI, Yoko, Tokyo 100-8405 (JP); NOJIRI, Yu, Tokyo 100-8405 (JP); IGUCHI, Yoshinori, Tokyo 100-8405 (JP); IWATA, Osamu, Tokyo 100-8405 (JP); TAO, Yukihiro, Tokyo 100-8405 (JP)
(74) Representative: Müller-Boré & Partner Patentanwälte PartG mbB
(86) International application number: PCT/JP2021/033732
(87) International publication number: WO 2022/075015

(57) **Abstract**

A laminated glass includes a first glass plate; and a second glass plate, wherein a first interlayer is arranged on the first glass plate, wherein a second interlayer is arranged on the second glass plate, wherein the first glass plate and the second glass plate are arranged so as to have the first interlayer and the second interlayer face each other, wherein an enclosing layer is arranged between the first interlayer and the second interlayer, wherein the enclosing layer includes a functional member having a sidewall, and a dummy layer arranged on the sidewall of the functional member, the functional member including one or more transparent layers, wherein the functional member has a thickness of 200 µm at a maximum, wherein the dummy layer is made of a thermoplastic resin, and wherein, when denoting an average refractive index of the transparent layers included in the functional member as n_{A}, and denoting a refractive index of the dummy layer as n_{B}, a difference Δn of the refractive indices expressed by an absolute value |n_{A}-n_{B}| is less than or equal to 0.05.

## Description

### [Technical Field]

The present disclosure relates to laminated glass.

### [Background Art]

Laminated glass that is configured to have two glass plates bonded to each other via an interlayer is used in many fields such as glass members for vehicles and window glass for buildings.

Recently, it has been proposed to configure laminated glass for automobiles, by enclosing a functional member that includes a dimming sheet, an electroluminescent element, or the like in an interlayer (e.g., Patent Document 1).

In addition, in order to suppress the level difference caused by insertion of a functional member, it has been proposed to cut out a central portion of the interlayer, and arrange the functional member in this cut-out portion (Patent Document 2).

### [Related Art Documents]

### [Patent Documents]

[Patent Document 1] Japanese Translation of PCT International Application No. 2004-527894
[Patent Document 2] International Publication No. WO2007/142319

### [Summary of the Invention]

### [Problem to be Solved by the Invention]

In the conventional configuration in which the functional member is enclosed in the cut-out portion of the interlayer, there is a problem in that a gap is likely to be formed adjacent to the sidewall of the functional member. In addition, if such a gap is present, there is a problem in that the profile of the functional member becomes noticeable when the laminated glass is viewed from the front, and the design of the laminated glass is deteriorated.

The present invention has been devised in view of such background, and has an object to provide a laminated glass in which the profile of a functional member is less noticeable and the design is improved significantly.

### [Means for Solving Problem]

In the present invention, a laminated glass is provided that includes a first glass plate; and a second glass plate,
wherein a first interlayer is arranged on the first glass plate,
wherein a second interlayer is arranged on the second glass plate,
wherein the first glass plate and the second glass plate are arranged so as to have the first interlayer and the second interlayer face each other,
wherein an enclosing layer is arranged between the first interlayer and the second interlayer,
wherein the enclosing layer includes a functional member having a sidewall, and a dummy layer arranged on the sidewall of the functional member, the functional member including one or more transparent layers,
wherein the functional member has a thickness of 200 um at a maximum,
wherein the dummy layer is made of a thermoplastic resin, and
wherein, when denoting an average refractive index of the transparent layers included in the functional member as n_{A}, and denoting a refractive index of the dummy layer as n_{B}, a difference Δn of the refractive indices expressed by an absolute value |n_{A}-n_{B}| is less than or equal to 0.05.

### [Advantageous Effects of the Invention]

According to the present invention, a laminated glass in which the profile of a functional member is less noticeable, and the design is improved significantly, can be provided.

### [Brief Description of the Drawings]

[FIG. 1] FIG. 1 is a cross-sectional view schematically illustrating a configuration of a laminated glass according to one embodiment of the present invention;
[FIG. 2] FIG. 2 is a diagram schematically illustrating an example of a flow of a method of manufacturing the laminated glass according to one embodiment of the present invention;
[FIG. 3] FIG. 3 schematically illustrates a step of the method of manufacturing the laminated glass according to one embodiment of the present invention;
[FIG. 4] FIG. 4 schematically illustrates a step of the method of manufacturing the laminated glass according to one embodiment of the present invention;
[FIG. 5] FIG. 5 schematically illustrates a step of the method of manufacturing the laminated glass according to one embodiment of the present invention;
[FIG. 6] FIG. 6 schematically illustrates a step of the method of manufacturing the laminated glass according to one embodiment of the present invention;
[FIG. 7] FIG. 7 schematically illustrates a step of the method of manufacturing the laminated glass according to one embodiment of the present invention;
[FIG. 8] FIG. 8 schematically illustrates a step of the method of manufacturing the laminated glass according to one embodiment of the present invention;
[FIG. 9] FIG. 9 schematically illustrates a step of the method of manufacturing the laminated glass according to one embodiment of the present invention;
[FIG. 10] FIG. 10 is a cross-sectional view schematically illustrating a configuration of a laminated glass according to another embodiment of the present invention;
[FIG. 11] FIG. 11 is a diagram schematically illustrating an example of a flow of a method of manufacturing the laminated glass according to said another embodiment of the present invention;
[FIG. 12] FIG. 12 schematically illustrates a step of the method of manufacturing the laminated glass according to said another embodiment of the present invention;
[FIG. 13] FIG. 13 schematically illustrates a step of the method of manufacturing the laminated glass according to said another embodiment of the present invention;
[FIG. 14] FIG. 14 schematically illustrates a step of the method of manufacturing the laminated glass according to said another embodiment of the present invention;
[FIG. 15] FIG. 15 schematically illustrates a step of the method of manufacturing the laminated glass according to said another embodiment of the present invention;
[FIG. 16] FIG. 16 is a cross-sectional view schematically illustrating a configuration of a laminated glass according to yet another embodiment;
[FIG. 17] FIG. 17 is a top view schematically illustrating an example of a configuration of a windshield to which a laminated glass according to one embodiment of the present invention is applied; and
[FIG. 18] FIG. 18 is a top view schematically illustrating an example of the form of an enclosing layer used in a windshield illustrated in FIG. 17.

### [Embodiments for Carrying Out the Invention]

In the following, with reference to the drawings, embodiments of the present invention will be described.

As described above, laminated glass as described in Patent Document 2 that is configured to have a functional member enclosed in a cut-out portion of an interlayer, has a problem in that a gap is likely to be formed adjacent to the sidewall of the functional member. In addition, if such a gap is present, there is a problem in that the profile of the functional member becomes noticeable when the laminated glass is viewed from the front, and the design of the laminated glass is deteriorated.

In contrast to that, according to one embodiment of the present invention, a laminated glass is provided that includes a first glass plate; and a second glass plate,
wherein a first interlayer is arranged on the first glass plate,
wherein a second interlayer is arranged on the second glass plate,
wherein the first glass plate and the second glass plate are arranged so as to have the first interlayer and the second interlayer face each other,
wherein an enclosing layer is arranged between the first interlayer and the second interlayer,
wherein the enclosing layer includes a functional member having a sidewall, and a dummy layer arranged on the sidewall of the functional member, the functional member including one or more transparent layers,
wherein the functional member has a thickness of 200 µm at a maximum,
wherein the dummy layer is made of a thermoplastic resin, and
wherein, when denoting an average refractive index of the transparent layers included in the functional member as n_{A}, and denoting a refractive index of the dummy layer as n_{B}, a difference Δn of the refractive indices expressed by an absolute value |n_{A}-n_{B}| is less than or equal to 0.05.

According to one embodiment of the present invention, a dummy layer is arranged adjacent to the sidewall of the functional member.

This dummy layer is made of a thermoplastic resin that is melted by heating. Therefore, in the case where a resin for the dummy layer is arranged on the sidewall of the functional member, and the resin is heated, the resin for the dummy layer is melted to have the dummy layer adhere to the sidewall of the functional member. In other words, the dummy layer can be arranged next to the functional members without a gap.

In addition, according to one embodiment of the present invention, a difference Δn of the refractive indices defined as described above is adjusted to be less than or equal to 0.05. It is favorable that the difference Δn of the refractive indices is less than or equal to 0.01, and more favorable to be less than or equal to 0.001.

Thanks to these effects, according to one embodiment of the present invention, the boundary between the functional member and the dummy layer can be made less noticeable, and thereby, the design of the laminated glass can be improved significantly.

Note that according to one embodiment of the present invention, the enclosing layer including the functional member has a thickness of less than or equal to 200 um. In general, in the case of such a thin enclosing layer, it is not easy to cut out the interior with high precision in order to arrange a functional member.

However, according to one embodiment of the present invention, as will be described later, a functional member can be arranged at a desired position without cutting out the enclosing layer. Therefore, according to one embodiment of the present invention, even if using a thin enclosing layer having a thickness of less than or equal to 200 µm at the maximum, a high-quality laminated glass can be manufactured relatively easily.

### (Laminated glass according to one embodiment of the present invention)

Next, with reference to the drawings, a laminated glass according to one embodiment of the present invention will be further described in detail.

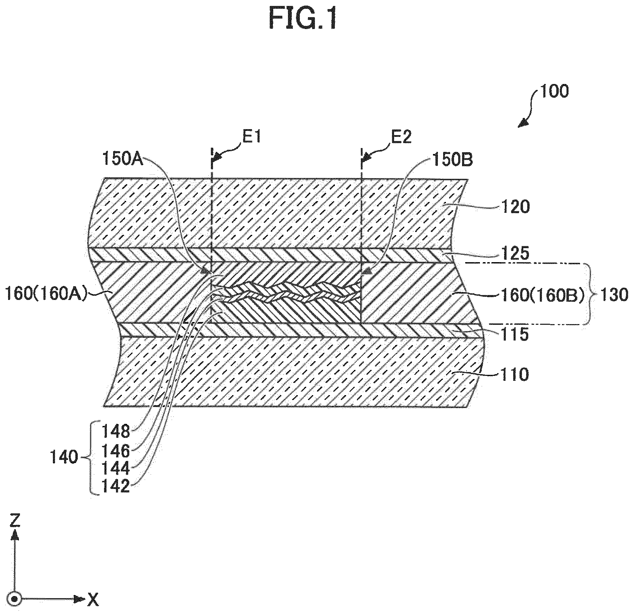

FIG. 1 schematically illustrates a cross section of an example of a configuration of a laminated glass according to one embodiment of the present invention.

As illustrated in FIG. 1, a laminated glass (hereafter, referred to as a "first laminated glass") 100 according to one embodiment of the present invention includes a first glass plate 110, a second glass plate 120, and an enclosing layer 130 arranged therebetween.

A first interlayer 115 is arranged on one surface of the first glass plate 110, and a second interlayer 125 is arranged on one surface of the second glass plate 120. The first glass plate 110 and the second glass plate 120 are arranged so as to have the respective interlayers 115 and 125 face each other. Therefore, the enclosing layer 130 is arranged between the first interlayer 115 and the second interlayer 125.

The enclosing layer 130 includes a functional member 140.

In the example illustrated in FIG. 1, the functional member 140 is a screen member having reflectivity, and hence, has a reflecting layer 144. More specifically, the functional member 140 includes a first transparent layer 142, the reflecting layer 144, an adhesive layer 146, and a second transparent layer 148 in order of closeness to the first glass plate 110.

In addition, the enclosing layer 130 includes a dummy layer 160 arranged adjacent to the functional member 140.

For example, in the example illustrated in FIG. 1, the first laminated glass 100 has a first dummy layer 160A, the functional member 140, and a second dummy layer 160B arranged in this order over a direction (the X direction in FIG. 1) perpendicular to the thickness direction (the Z direction in FIG. 1), to form the enclosing layer 130.

The enclosing layer 130 has a thickness (dimension in the Z direction in FIG. 1) of less than or equal to 200 um at the maximum.

In the enclosing layer 130, the functional member 140 has a first sidewall 150A and a second sidewall 150B.

Here, the first dummy layer 160A is arranged so as to adhere to the first sidewall 150A of the functional member 140. Therefore, there is substantially no gap between the functional member 140 and the first dummy layer 160A. Similarly, the second dummy layer 160B is arranged so as to adhere to the second sidewall 150B. Therefore, there is substantially no gap between the functional member 140 and the second dummy layer 160B.

In addition, in the first laminated glass 100, when denoting the refractive index of the functional member 140 as n₁₁ and denoting the refractive index of the first dummy layer 160A as n₁₂, the functional member 140 and the first dummy layer 160A are adjusted so as to make the absolute value of a difference between the refraction indices |n₁₁-n₁₂| less than or equal to 0.05. Similarly, when denoting the refractive index of the second dummy layer 160B as n₁₃, the second dummy layer 160B is adjusted so as to make the absolute value a difference between the refraction indices |n₁₁-n₁₃| less than or equal to 0.05.

Note that in the present application, the "refractive index of a functional member" represents an average of the refractive indices of all transparent layers included in the functional member. Therefore, the refractive index n₁₁ of the functional member 140 is represented as an average of those of the first transparent layer 142, the adhesive layer 146, and the second transparent layer 148.

In the case where the enclosing layer 130 is configured in this way, a boundary E1 between the functional member 140 and the first dummy layer 160A and a boundary E2 between the functional member 140 and the second dummy layer 160B can be made less noticeable. Therefore, the design of the first laminated glass 100 can be improved significantly.

In particular, the first dummy layer 160A and/or the second dummy layer 160B may be made of the same material as that of second transparent layer 148 of the functional member 140. In this case, the boundary E1 and/or the boundary E2 becomes even less noticeable, and the design of the first laminated glass 100 can be improved further.

### (Constituent members of a laminated glass according to one embodiment of the present invention)

Next, members that forms a laminated glass according to one embodiment of the present invention will be further described in detail.

Note that here, for the sake of clarity, the reference numerals illustrated in FIG. 1 are used for designating the respective members.

### (First interlayer 115 and second interlayer 125)

The first interlayer 115 is made of a transparent material, for example, a transparent resin or the like. As such transparent resins, for example, PVB (polyvinyl butyral), EVA (ethylene-vinyl acetate copolymer resin), ionomer (a material in which molecules of an ethylene-methacrylic acid copolymer are crosslinked with metal ions, etc.), COP (cycloolefin polymer), acrylic pressure-sensitive adhesives, and other pressure-sensitive adhesives, and the like may be enumerated.

The same applies to the second interlayer 125.

### (Functional member 140)

The functional member 140 functions as a reflective screen.

The visible light reflectance of the functional member 140 may be, for example, 5% to 50%.

The refractive index of the functional member 140, i.e., an average refractive index nn of the first transparent layer 142, the adhesive layer 146, and the second transparent layer 148 included in the functional member 140 is, for example, within a range of 1.45 to 1.55. It is favorable that the average refractive index n₁₁ is within a range of 1.48 to 1.53.

It is favorable that the functional member 140 has a thickness of 15 µm to 200 µm.

### (First transparent layer 142)

The material of the first transparent layer 142 is not limited in particular as long as it is a transparent material on the surface of which unevenness can be formed. For example, the first transparent layer 142 may be formed of a transparent resin. As raw materials for such resins, photocurable resins such as acrylic resins and epoxy resins, thermosetting resins, and thermoplastic resins may be enumerated.

An uneven surface of the first transparent layer 142 may have an arithmetic average roughness Ra within a range of 0.01 µm to 20 um. It is favorable that the arithmetic average roughness Ra is within a range of 0.01 um to 20 µm.

In addition, the uneven surface of the first transparent layer 142 may have a difference between a maximum height and a minimum height (referred to as the "maximum PV value") within a range of 0.1 µm to 50 µm. It is favorable that the maximum PV value is within a range of 0.05 um to 50 µm.

The transmittance of the first transparent layer 142 is favorably greater than or equal to 50%, more favorably greater than or equal to 75%, and furthermore favorably greater than or equal to 90%.

The first transparent layer 142 has a thickness (maximum thickness), for example, within a range of 0.5 µm to 50 µm.

### (Second transparent layer 148)

The second transparent layer 148 may be formed of a resin having a crosslinked structure. As such resins, photocurable resins, thermosetting resins, or the like may be enumerated.

As the photocurable resin or the thermosetting resin, a cured product of a composition having an unsaturated group in molecules, an epoxy resin, a silicone resin, and the like may be enumerated.

For example, in the case where the second transparent layer 148 is a cured product of a composition having an unsaturated group in molecules, a resin obtained by curing a composition including molecules having two or more unsaturated groups per molecule; or a resin obtained by curing a composition including molecules having two or more unsaturated groups per molecule and molecules including one unsaturated group per molecule, is favorable. It is favorable that the average number of unsaturated groups per molecule is greater than or equal to two.

In the case where the second transparent layer 148 is made of an epoxy resin, a resin obtained by curing a composition of one-liquid type including molecules including three or more epoxy groups per molecule; or a resin obtained by curing a composition including molecules including three or more epoxy groups per molecule and molecules including one or two epoxy groups per molecule, is favorable. It is favorable that in the one-liquid type epoxy resin, the average number of epoxy groups per molecule is greater than or equal to three.

In the case where the second transparent layer 148 is made of a silicone resin, a condensation type silicone resin obtained by condensation-curing organosiloxane having three or more alkoxy groups, is favorable.

It is favorable that the cure shrinkage of the second transparent layer 148 is within a range of 3% to 20%. If greater than or equal to 3%, the viscosity and the hardness of the second transparent layer 148 are favorable and easily adjusted, and if less than or equal to 20%, delamination is less likely to occur.

The transmittance of the second transparent layer 148 is favorably greater than or equal to 50%, more favorably greater than or equal to 75%, and furthermore favorably greater than or equal to 90%.

As the resin having such characteristics, a photocurable resin is favorable in terms of ease of manufacturing and small influence on the other layers in manufacturing steps; in particular, a photocured product of a composition having an average of two or more unsaturated groups per molecule is favorable. As the photocurable resin, an acrylic resin composition having two or more unsaturated groups on average, and a urethane acrylate may be enumerated. In addition, the acrylic equivalent of 50 g/eq to 700 g/eq may be considered, and 60 g/eq to 600 g/eq is favorable.

In order to improve adhesion force with the adhesive layer 146, it is favorable that the second transparent layer 148 contains 0.5 to 15wt% of a silane coupling agent with respect to resins forming the second transparent layer 148. If the amount of the silane coupling agent is greater than or equal to 0.5%, an effect of improving the adhesion force is exhibited, and if the amount is less than or equal to 15%, a sufficient adhesion force is obtained. Even if the silane coupling agent is contained by an amount of greater than or equal to 15wt%, the adhesion force does not change; therefore, also from the viewpoint of cost, it is favorable that the silane coupling agent is contained by an amount of less than or equal to 15wt%.

As the silane coupling agent, for example, epoxysilanes such as 2-(3,4-epoxycyclohexyl) ethyltrimethoxysilane, 3-glycidoxypropyltrimethoxysilane, 3-glycidoxypropyltriethoxysilane, and 3-glycidoxypropylmethyldiethoxysilane; (meth) acryloxysilanes such as 3-methacryloxypropylmethyldimethoxysilane, 3-methacryloxypropyltrimethoxysilane, and 3-acryloxypropyltrimethoxysilane; vinylsilanes such as vinyltrimethoxysilane and N-2-(N-vinylbenzylaminoethyl)-3-aminopropyltrimethoxysilane; aminosilanes such as N-(2-aminoethyl)-3-aminopropylmethyldimethoxysilane, N-(2-aminoethyl)-3-aminopropyltrimethoxysilane, N-(2-aminoethyl)-N'-(2-aminoethyl)-3-aminopropyltriethoxysilane, 3-aminopropyltrimethoxysilane, 3-aminopropylmethyldimethoxysilane, and N-phenyl-3-aminopropyltrimethoxysilane; isocyanatesilanes such as 3-isocyanatepropyltrimethoxysilane; 3-ureidopropyltriethoxysilane; 3-mercaptopropyltrimethoxysilane; 3-chloropropyltrimethoxysilane; and the like, may be enumerated. It is favorable that the silane coupling agent is selected in consideration of miscibility with the resin forming the second transparent layer 148. For example, in the case where the resin forming the second transparent layer 148 is an acrylic resin, (meth) acryloxysilanes and vinylsilanes are favorable. In the case where the resin forming the second transparent layer 148 is an epoxy resin, epoxysilanes are favorable.

The second transparent layer 148 has a thickness (maximum thickness), for example, within a range of 0.01 µm to 50 µm.

### (Reflecting layer 144)

The reflecting layer 144 is configured so as to have a function of reflecting part of incident light and transmitting the other part of the incident light. Note that the reflecting layer 144 is not necessarily a single-layer film, and may have a multilayer structure.

For example, the reflecting layer 144 may be made of metals (including alloys), metal oxides, metal nitrides, and combinations of these. As the metal, aluminum (Al), silver (Ag), and an alloy of these (e.g., an alloy of gold and silver), may be enumerated. In addition, as the metallic oxide, metallic oxides and metallic nitrides of Group 3 elements to Group 16 elements in the periodic table, are favorable. In addition, oxides and nitrides of one or more species selected from among Zr, Ni, Cr, Ti, Zn, Nb, Zn, Pd, In, W, Si, and Mo among the above metal oxides, are more favorable.

Alternatively, the reflecting layer 144 may have a repeating structure of a metal film and an oxide film. In this case, for example, one metallic film and one oxide film have a thickness within a range of 1 nm to 100 nm, and it is favorable to be, for example, within a range of 4 nm to 25 nm.

The reflecting layer 144 has a thickness (total thickness in the case of a multilayer film), for example, within a range of 1 nm to 150 nm, and a range of 2 nm to 150 nm is favorable, a range of 5 nm to 80 nm is more favorable, and 5 nm to 50 nm is furthermore favorable. If the range is as above, the visible light transmittance can be easily increased.

### (Dummy layer 160)

As described above, the dummy layer 160 is made of a thermoplastic resin.

The dummy layer 160 may be made of, for example, a linear polymer.

The dummy layer 160 may be selected from among, for example, acrylic resin (water absorption rate of 0.3%), polyester resin (water absorption rate of 0.1%), polyurethane resin, polyurethane acrylate resin, polycarbonate resin (water absorption rate of 0.15%), polyvinyl butyral resin, cycloolefin resin polymer, cycloolefin copolymer resin, an ethylene-vinyl acetate copolymer resin, and the like.

Note that "linear" means that the main chain is linear, and does not specify whether or not a side chain is present. In addition, a polymer forming the dummy layer 160 may include a crosslinked structure as long as the effects of the present invention are not impaired.

As the cycloolefin polymer, polymers expressed by the following chemical structural formula "a" or "b" may be considered. According to the present invention, it is favorable that at least one of R¹ and R² or an additive contains a functional group that is reactive with metals and metallic oxides, such as an alkoxyl group, isocyanate group, epoxy group, silanol group, carbonyl group, amino group, or hydroxyl group. By adopting such a structure, adhesion to the reflective film can be realized while hydrophobicity is ensured by the cycloolefin main skeleton. 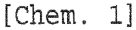 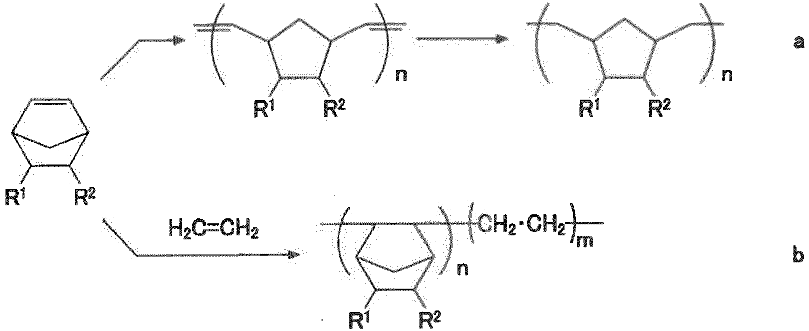 The dummy layer 160 may be made of a material similar to that of the second transparent layer 148.

The dummy layer 160 has a visible light transmittance of, for example, greater than or equal to 30%. It is favorable that the visible light transmittance is greater than or equal to 80%.

Each of the refractive index n₁₂ of the first dummy layer 160A and the refractive index n₁₃ of the second dummy layer 160B is, for example, within a range of 1.45 to 1.55.

It is favorable that the dummy layer 160 has a thickness substantially the same as that of the functional member 140. The difference between the thickness of the dummy layer 160 and the thickness of the functional member 140 may be, for example, within ±5%. Accordingly, even in the case where an unintended impact is applied to the first laminated glass 100, occurrences of cracks inside the first laminated glass 100 can be suppressed significantly.

Note that the adhesion force between the dummy layer 160 and the first interlayer 115 is favorably greater than or equal to 4 N/25-mm width. Similarly, the adhesion force between the dummy layer 160 and the second interlayer 125 is favorably greater than or equal to 4 N/25-mm width.

In this case, delamination between the dummy layer 160 and the first interlayer 115 and between the dummy layer 160 and the second interlayer 125 can be suppressed significantly.

### (Adhesive layer 146)

The adhesive layer 146 is provided in order to improve the adhesion force between the reflecting layer 144 and the second transparent layer 148. However, the adhesive layer 146 may be omitted.

The adhesive layer 146 may be made of a material similar to that of dummy layer 160.

The adhesive layer 146 has a thickness, for example, within a range of 0.01 µm to 1 µm.

### (Method of manufacturing a laminated glass according to one embodiment of the present invention)

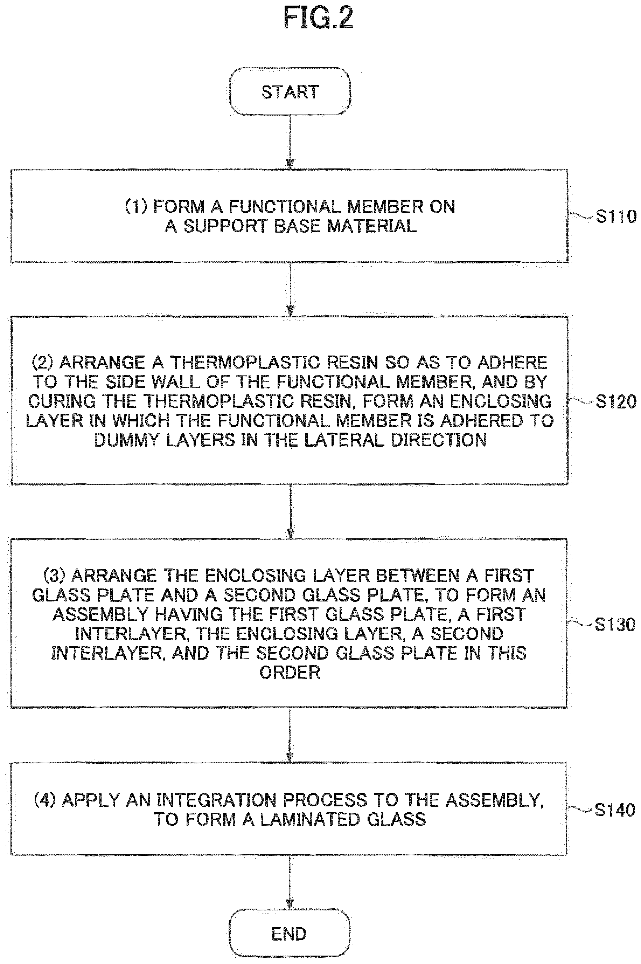

Next, with reference to FIGs. 2 to 11, an example of a method of manufacturing a laminated glass according to one embodiment of the present invention will be described.

FIG. 2 schematically illustrates an example of a flow of a method of manufacturing a laminated glass according to one embodiment of the present invention (hereafter, referred to as the "first method").

As illustrated in FIG. 2, the first method includes:
(1) a step of forming a functional member on a support base material (Step S110) ;
(2) a step of arranging a thermoplastic resin so as to adhere to the sidewall of the functional member, and curing the thermoplastic resin to form an enclosing layer in which the functional member is adhered to the dummy layer in a lateral direction (Step S120);
(3) a step of arranging the enclosing layer between a first glass plate and a second glass plate, to form an assembly having the first glass plate, a first interlayer, the enclosing layer, a second interlayer, and the second glass plate in this order (Step S130); and
(4) a step of applying an integration process to the assembly, to form a laminated glass (Step S140) .

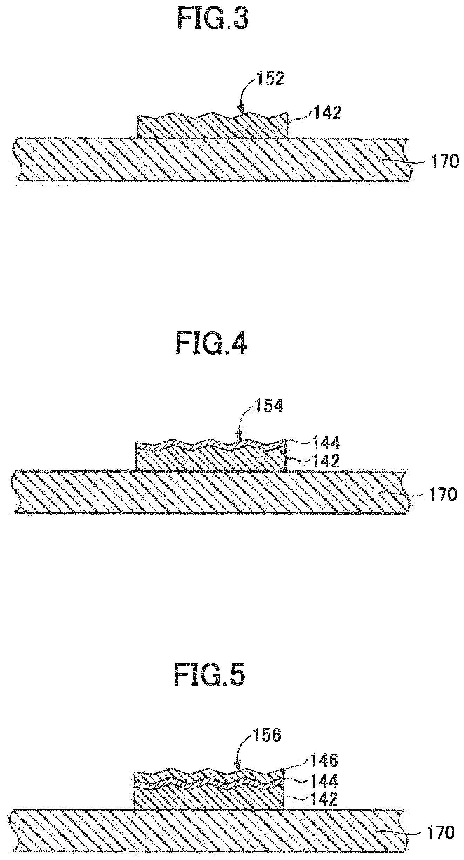

In the following, with reference to FIGs. 3 to 9, the respective steps will be described. Note that here, by taking the configuration of the first laminated glass 100 illustrated in FIG. 1 as an example, and the manufacturing method thereof will be described. Therefore, the reference numerals illustrated in FIG. 1 are used for designating the respective members.

### (Step S110)

First, a functional member 140 is formed on a support base material.

The material of the support base material is not limited in particular as long as films can be laminated on the upper surface. The support base material may be, for example, a resin substrate such as PET (polyethylene terephthalate).

FIG. 3 schematically illustrates a state in which a first transparent layer 142 for the functional member 140 is formed on the support base material 170. The first transparent layer 142 has an uneven surface 152. The first transparent layer 142 having such an uneven surface 152 is formed by, for example, arranging a first resin for the first transparent layer 142 on the support base material 170, and then, curing the first resin in a state in which a mold having unevenness is pressed against the upper surface of the first resin.

Therefore, it is favorable that the first resin is a resin that is cured by an external stimulus (energy application), such as a photocurable resin, a thermosetting resin, a thermoplastic resin, and the like.

The method of arranging the first resin is not limited in particular. The first resin may be arranged on the support base material 170 by, for example, die coating, spin coating, ink-jet coating, spray coating, or the like.

The uneven surface 152 of the first transparent layer 142 has an arithmetic average roughness Ra, for example, within a range of 0.01 µm to 20 µm.
In addition, the maximum PV value of the uneven surface 152 is within a range of 0.01 µm to 50 µm, and it is more favorable to be 0.05um to 50µm

Next, a reflecting layer 144 is arranged on the first transparent layer 142.

FIG. 4 schematically illustrates a state in which the reflecting layer 144 is formed on the first transparent layer 142. The reflecting layer 144 may be deposited by a deposition technique, for example, evaporation, physical vapor deposition (PVD), sputtering, or the like.

As described above, the material of the reflecting layer 144 may be made of metals (including alloys), metal oxides, metal nitrides, and combinations of these. In addition, the reflecting layer 144 may be formed to be a multilayer film.

The reflecting layer 144 has a thickness, for example, within a range of 1 nm to 150 nm, and it is more favorable to be 1 nm to 20 nm. The reflecting layer 144 is relatively thin; therefore, as illustrated in FIG. 4, the outermost surface of the reflecting layer 144 becomes an uneven surface 154 that reflects the shape of the uneven surface 152 of the first transparent layer 142 on the lower side.

Next, an adhesive layer 146 is arranged on the reflecting layer 144.

FIG. 5 schematically illustrates a state in which the adhesive layer 146 is formed on the reflecting layer 144.

The adhesive layer 146 may be selected from among, for example, acrylic resin, polyester resin, polyurethane resin, polyurethane acrylate resin, ester resin, polycarbonate resin, polyvinyl butyral resin, cycloolefin resin, cycloolefin copolymer resin, vinyl acetate copolymer resin, and the like. The molecular weight of the adhesive layer 146 may be, for example, within a range of Mn (number average molecular weight) = 1,000 to 1,000,000. It is favorable that Tg of the adhesive layer 146 is, for example, 40 °C to 150 °C.

The method of forming the adhesive layer 146 is not limited in particular.

For example, the adhesive layer 146 may be formed by uniformly applying a coating liquid prepared by dissolving or suspending the material described above in an appropriate solvent on the reflecting layer 144 to form a coating layer, and then, volatilizing the solvent from the coating layer. This method can make the molding shrinkage factor of the adhesive layer 146 extremely small.

The solvent is not limited in particular as long as it dissolves the material to form the adhesive layer and is easily dried, and may be, for example, alcohol, acetone, methyl ethyl ketone, ethyl acetate, toluene, or the like. In addition, volatilization of the solvent may be carried out by heating the coating layer. In this case, the heat treatment temperature may be, for example, within a range of 50 °C to 150 °C.

Alternatively, the adhesive layer 146 may be formed by arranging an unreacted monomer on the reflecting layer 144 and polymerizing the monomer.

The adhesive layer 146 has a thickness, for example, within a range of 1 nm to 150 nm, and it is more favorable to be 1 nm to 20 nm. The adhesive layer 146 is relatively thin; therefore, as illustrated in FIG. 5, the outermost surface of the adhesive layer 146 becomes an uneven surface 156 that reflects the shape of the uneven surface 154 of the reflecting layer 144 on the lower side.

Next, a second transparent layer 148 is arranged on the adhesive layer 146.

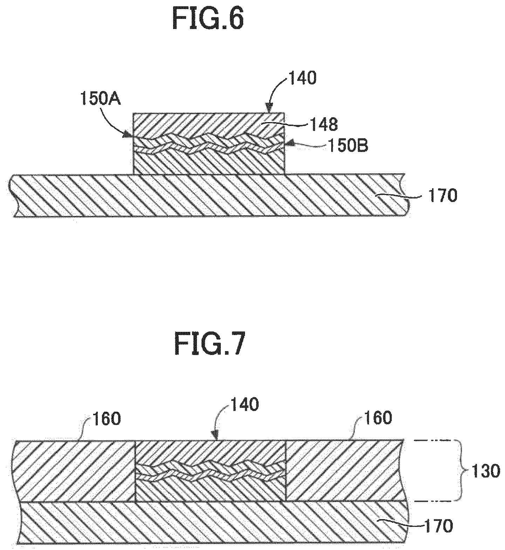

FIG. 6 schematically illustrates a state in which the second transparent layer 148 is formed on the adhesive layer 146.

The second transparent layer 148 is formed by arranging a second resin on the adhesive layer 146 and curing the second resin.

The second resin is selected from among resins from which the second transparent layer 148 can be formed by a crosslinking reaction. For example, the second resin may be selected from among an ultraviolet curable resin having an unsaturated group, a thermosetting resin or a thermoplastic resin, an epoxy resin, and a silicone resin.

The method of arranging the second resin is not limited in particular. The second resin may be arranged on the adhesive layer 146 by, for example, die coating, spin coating, ink-jet coating, spray coating, or the like.

Thereafter, by curing the second resin, the second transparent layer 148 is formed on the adhesive layer 146.

Through the above steps, the functional member 140 can be formed on the support base material 170. At this time, it is favorable that the surface on the lower side (support base material 170 side) of the first transparent layer 142 and the surface on the upper side of the second transparent layer 148 are smooth surfaces having no unevenness. It is favorable that the arithmetic average roughness Ra of the smooth surface is less than 0.01 µm.

### (Step S120)

Next, the dummy layer 160 is formed so as to adhere to the first sidewall 150A and the second sidewall 150B of the functional member 140.

The dummy layer 160 can be formed by arranging a thermoplastic resin on the support base material 170 so as to be arrayed with the functional member 140 and curing the thermoplastic resin.

FIG. 7 schematically illustrates a state in which the dummy layer 160 is arranged on the sides of the functional member 140 to have the enclosing layer 130 formed.

The enclosing layer 130 has a thickness of less than or equal to 200 µm at the maximum.

### (Step S130)

Next, an assembly having a first glass plate 110, a first interlayer 115, the enclosing layer 130, a second interlayer 125, and a second glass plate 120 in this order is formed.

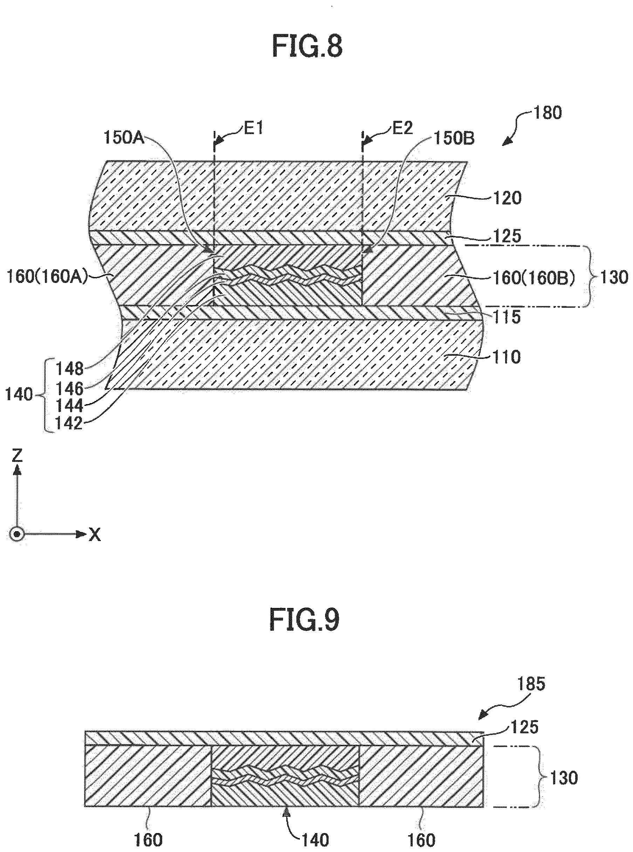

FIG. 8 schematically illustrates a cross section of an assembly 180.

The method of forming the assembly 180 is not limited in particular.

The assembly 180 may be formed by, for example, separating the enclosing layer 130 from the support base material 170, and then, arranging the enclosing layer 130 between the first glass plate 110 having the first interlayer 115, and the second glass plate 120 having the second interlayer 125.

Alternatively, the assembly 180 may be formed after forming an intermediate product as illustrated in FIG. 9. In this case, first, on the enclosing layer 130, a second interlayer 125 is arranged. Next, the enclosing layer 130 is separated from the support base material 170 to form an intermediate product 185.

Thereafter, the intermediate product 185 is arranged between the first glass plate 110 having the first interlayer 115 and the second glass plate 120, to have the assembly 180 formed.

### (Step S140)

Next, an integration process is applied to the assembly 180.

Conditions of the integration process may also vary depending on the materials included in the assembly 180. The integration process may be executed by, for example, holding the assembly 180 under vacuum at 120 °C for one hour.

By the integration process, the members included in the assembly 180 are firmly adhered to each other.

By the above steps, the first laminated glass 100 as illustrated in FIG. 1 can be manufactured.

Here, in the method of manufacturing a laminated glass described in Patent Document 2, an interlayer is cut out, and a functional member is arranged in the cut-out portion. However, in such a manufacturing method, if the interlayer has a thickness of less than or equal to 200 um, it becomes difficult to appropriately cut out the interlayer to enclose the functional member in the cut-out portion.

In contrast to that, in the first method, the functional member 140 can be arranged without cutting out the enclosing layer 130. Therefore, in the first method, even if using a thin enclosing layer 130 of less than or equal to 200 µm, the functional member 140 can be arranged properly.

In this way, by the first method, a high-quality laminated glass can be manufactured relatively easily.

### (Laminated glass according to another embodiment of the present invention)

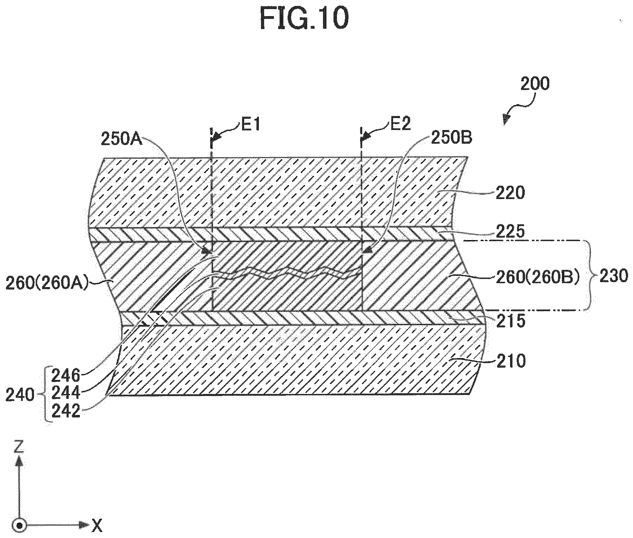

Next, with reference to FIG. 10, a laminated glass according to another embodiment of the present invention will be described.

FIG. 10 schematically illustrates a cross section of an example of a configuration of a laminated glass according to said another embodiment of the present invention.

As illustrated in FIG. 10, a laminated glass 200 according to said another embodiment of the present invention (hereafter, referred to as "second laminated glass") has a configuration similar to that of the first laminated glass 100 illustrated in FIG. 1. Therefore, in the second laminated glass 200, members similar to those of the first laminated glass 100 are designated by reference numerals that are added with 100 to those illustrated in FIG. 1.

However, in the second laminated glass 200, the configuration of a functional member 240 provided in an enclosing layer 230 is different from that of the first laminated glass 100. In other words, in the second laminated glass 200, the functional member 240 includes a first transparent layer 242, a reflecting layer 244, and an adhesive layer 246, and a second transparent layer is omitted.

Also in the second laminated glass 200, the enclosing layer 230 has a thickness (dimension in the Z direction in FIG. 10) of less than or equal to 200 um at the maximum. In addition, the enclosing layer 230 includes the functional member 240 and a dummy layer 260 arranged adjacent to the functional member 240.

For example, in the example illustrated in FIG. 10, a first dummy layer 260A, the functional member 240, and a second dummy layer 260B are arranged in this order along a direction (the X direction in FIG. 10) perpendicular to the thickness direction (the Z direction in FIG. 10), to form the enclosing layer 230.

The functional member 240 has a first sidewall 250A and a second sidewall 250B.

The first dummy layer 260A is arranged so as to adhere to the first sidewall 250A of the functional member 240. Therefore, there is substantially no gap between the functional member 240 and the first dummy layer 260A. Similarly, the second dummy layer 260B is arranged to be adhered to the second sidewall 250B. Therefore, there is substantially no gap between the functional member 240 and the second dummy layer 260B.

In addition, in the second laminated glass 200, when denoting the refractive index of the functional member 240 as n₂₁, and denoting the refractive index of the first dummy layer 260A as n₂₂, the functional member 240 and the first dummy layer 260A are adjusted so as to make the absolute value of a difference between the refraction indices |n₂₁-n₂₂| less than or equal to 0.05. Similarly, when denoting the refractive index of the second dummy layer 260B as n₂₃, the second dummy layer 260B is adjusted so as to make an absolute value the difference between the refraction indices |n₂₁-n₂₃| less than or equal to 0.05.

Note that as defined above, the refractive index n₂₁ of the functional member 240 is expressed as an average of those of the first transparent layer 242 and the adhesive layer 246.

In the case where the enclosing layer 230 is configured in this way, a boundary E1 between the functional member 240 and the first dummy layer 260A and a boundary E2 between the functional member 240 and the second dummy layer 260B can be made less noticeable. Therefore, the design of the second laminated glass 200 can be improved significantly.

In particular, the first dummy layer 260A and/or the second dummy layer 260B may be made of the same material as that of adhesive layer 246 of the functional member 240. In this case, the boundary E1 and/or the boundary E2 becomes even less noticeable, and the design of the second laminated glass 200 can be improved further.

### (Manufacturing method of a laminated glass according to said another embodiment of the present invention)

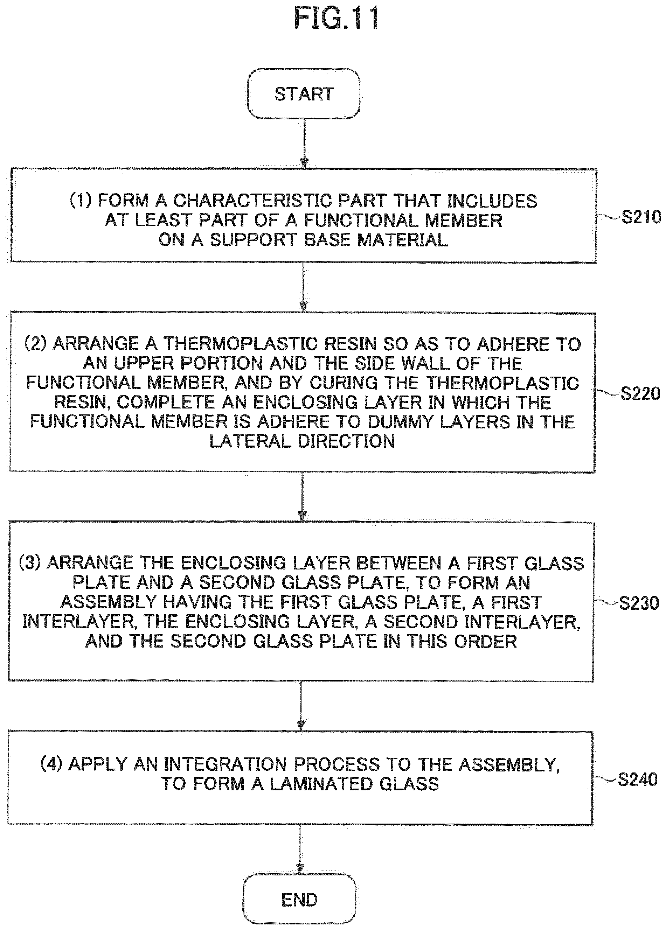

Next, with reference to FIGs. 11 to 15, a method of manufacturing a laminated glass according to said another embodiment of the present invention will be described.

FIG. 11 schematically illustrates an example of a flow of a method of manufacturing a second laminated glass (hereafter, referred to as the "second method").

As illustrated in FIG. 11, the second method includes:
(1) a step of forming a characteristic part including at least part of a functional member on a support base material (Step S210);
(2) a step of arranging a thermoplastic resin so as to adhere to the upper part and the sidewall of the characteristic part, and curing the thermoplastic resin to complete an enclosing layer in which the functional member is adhered to the dummy layer in a lateral direction (Step S220);
(3) a step of arranging the enclosing layer between a first glass plate and a second glass plate, to form an assembly having the first glass plate, a first interlayer, the enclosing layer, a second interlayer, and the second glass plate in this order (Step S230); and
(4) a step of applying an integration process to the assembly, to form a laminated glass (Step S240).

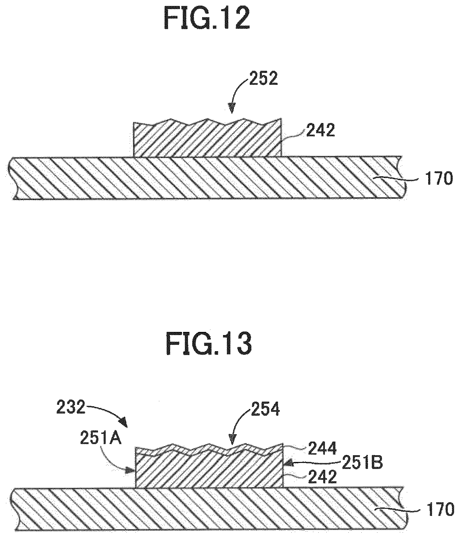

In the following, with reference to FIGs. 12 to 15, the respective steps will be described. Note that here, by taking the configuration of the second laminated glass 200 illustrated in FIG. 10 as an example, and the manufacturing method thereof will be described. Therefore, the reference numerals illustrated in FIG. 10 are used for designating the respective members.

### (Step S210)

First, part of a functional member 240 (hereafter, referred to as the "characteristic part") is formed on a support base material.

As the support base material, for example, a material similar to that of the support base material 170 in the first method described above can be used.

FIG. 12 schematically illustrates a state in which a first transparent layer 242 for the functional member 240 is formed on the support base material 170.

The first transparent layer 242 can be formed by a method similar to the method of forming the first transparent layer 142 in the first method described above.

The first transparent layer 242 has an uneven surface 252.

Next, a reflecting layer 244 is arranged on the first transparent layer 242.

FIG. 13 schematically illustrates a state in which the reflecting layer 244 is formed on the first transparent layer 242.

The reflecting layer 244 can be formed by a method similar to the method of forming the reflecting layer 144 in the first method described above.

The reflecting layer 244 has an uneven surface 254.

Through the above steps, the characteristic part 232 is formed on the support base material 170. The characteristic part 232 has a first sidewall 251A and a second sidewall 251B.

### (Step S220)

Next, a thermoplastic resin is arranged so as to adhere to the first sidewall 251A and the second sidewall 251B of the characteristic part 232. Note that the thermoplastic resin is also arranged on the upper surface of the characteristic part 232.

The thermoplastics may be a resin used at Step S120 in the first method described above.

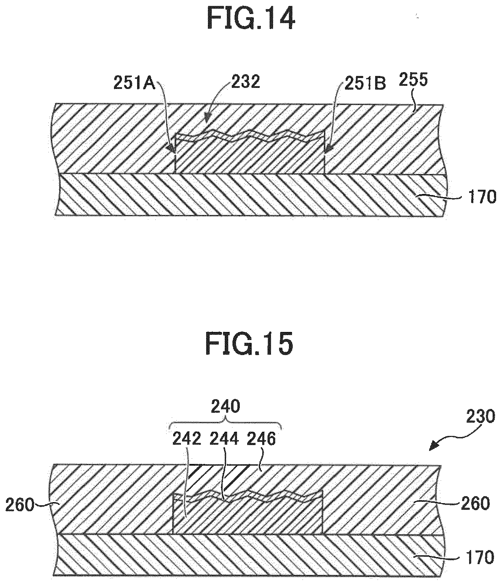

FIG. 14 schematically illustrates a state in which the thermoplastic resin 255 is arranged on the upper surface, the first sidewall 251A, and the second sidewall 251B of the characteristic part 232.

Next, the thermoplastic resin 255 is cured.

Accordingly, the adhesive layer 246 is formed on the upper surface of the characteristic part 232 to complete the functional member 240. In addition, a dummy layer 260 is formed by curing the thermoplastic resin 255 arranged on the side surface of the characteristic part 232.

As a result, on the support base material 170, an enclosing layer 230 as illustrated in FIG. 15 is formed.

### (Step S230 to Step S240)

Thereafter, steps similar to Steps S130 to S140 in the first method are carried out.

In other words, the enclosing layer 230 is arranged between the first glass plate 210 and the second glass plate 220 to have an assembly formed. The assembly has the first glass plate 210, a first interlayer 215, the enclosing layer 230, a second interlayer 225, and the second glass plate 220 in this order.

In addition, by applying the integration process to the assembly, the members included in the assembly are adhered to each other. As a result, the second laminated glass 200 as illustrated in FIG. 10 can be manufactured.

In the second method, the functional member 240 can be arranged without cutting out the enclosing layer 230. Therefore, in the second method, even if using a thin enclosing layer 230 of less than or equal to 200 µm, the functional member 240 can be arranged properly.

Therefore, by the second method, a high-quality laminated glass can be manufactured relatively easily.

### (Laminated glass according to yet another embodiment)

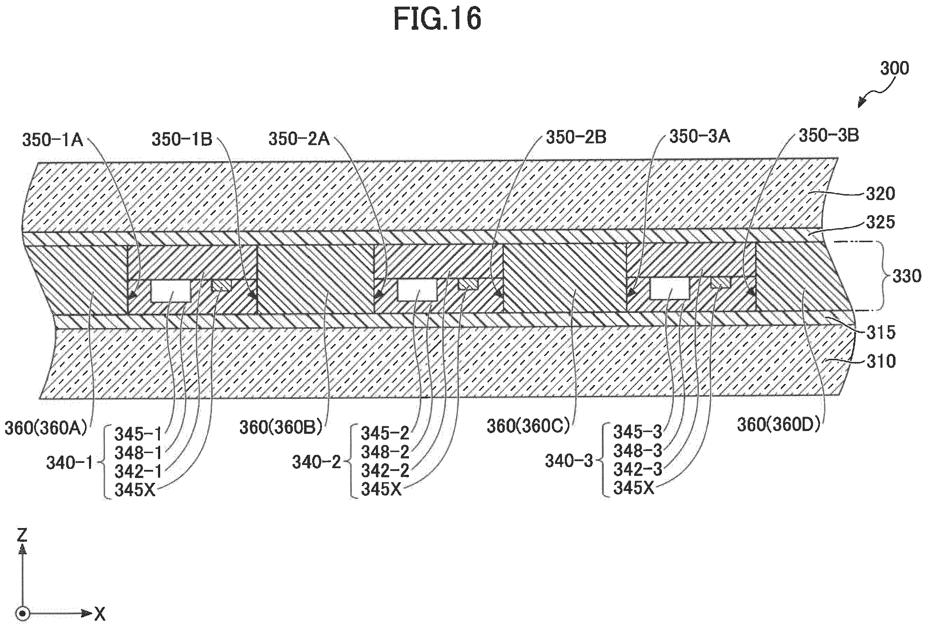

Next, with reference to FIG. 16, a laminated glass according to yet another embodiment will be described.

FIG. 16 schematically illustrates a cross section of an example of a configuration of a laminated glass according to the yet another embodiment.

As illustrated in FIG. 16, a laminated glass 300 according to the yet another embodiment (hereafter, referred to as the "third laminated glass") has a configuration similar to that of the first laminated glass 100 illustrated in FIG. 1. Therefore, in the third laminated glass 300, members similar to those of the first laminated glass 100 are designated by reference numerals that are added with 200 to those illustrated in FIG. 1.

However, in the third laminated glass 300, the configuration of a functional member provided in an enclosing layer 330 is different from that of the first laminated glass 100.

That is, the enclosing layer 330 of the third laminated glass 300 has multiple functional members arranged, and the functional members include a light-emitting element such as a light emitting diode (LED). For example, FIG. 16 illustrates three functional members including a first functional member 340-1, a second functional member 340-2, and a third functional member 340-3.

Note that although it is not clear from FIG. 16, the respective functional members are arranged in a matrix shape in a top view of the third laminated glass 300. However, the arrangement form of the functional members is not limited in particular, and the functional members 340 may be arranged in any form in two dimensions.

Each of the functional members 340-1, 340-2, and 340-3 (hereafter collectively referred to as the "functional member 340") has a transparent layer, a light-emitting element, and a protective layer in order of closeness to the first glass plate 310. For example, the first functional member 340-1 includes a first light-emitting element 345-1 formed on a transparent layer 348-1 and a protective layer 342-1 arranged so as to cover the first light-emitting element 345-1. The same applies to the second functional member 340-2 and the third functional member 340-3.

Note that in the following description, the protective layers 342-1 to 342-3 may be collectively referred to as the "protective layer 342", the first light-emitting element 345-1 to the third light-emitting element 345-3 may be collectively referred to as the "light-emitting element 345", and the transparent layers 348-1 to 348-3 may be collectively referred to as the "transparent layer 348".

The enclosing layer 330 has a thickness (dimension in the Z direction in FIG. 16) of less than or equal to 100 µm at the maximum. In addition, the enclosing layer 330 includes the functional member 340 and a dummy layer arranged adjacent to the functional member 340.

For example, in the example illustrated in FIG. 16, a first dummy layer 360A, a first functional member 340-1, a second dummy layer 360B, a second functional member 340-2, a third dummy layer 360C, a third functional member 340-3, and a fourth dummy layer 360D are arranged in this order along a direction (the X direction in FIG. 16) perpendicular to the thickness direction (the Z direction in FIG. 161, to form the enclosing layer 330.

The first functional member 340-1 has a first sidewall 350-1A and a second sidewall 350-1B. The first dummy layer 360A is arranged so as to adhere to the first sidewall 350-1A of the first functional member 340-1. Therefore, there is substantially no gap between the functional member 340-1 and the first dummy layer 360A.

In addition, the second dummy layer 360B is arranged so as to adhere to the second sidewall 350-1B of the first functional member 340-1. Therefore, there is substantially no gap between the functional member 340-1 and the second dummy layer 360B.

The same applies to the second functional member 340-2 and the third functional member 340-3. In other words, there is substantially no gap between the sidewall of each functional member 340 and the dummy layer 360 arranged adjacent to the functional member 340.

In addition, in the third laminated glass 300, when denoting the refractive index of the first functional member 340-1 as n₃₁, and denoting the refractive index of the first dummy layer 360A as n₃₂, the first dummy layer 360A is adjusted so as to make the absolute value of a difference between the refraction indices |n₃₁-n₃₂| less than or equal to 0.05. Note that from the definition described above, the refractive index n₃₁ of the first functional member 340 is expressed as an average of the refractive index of the protective layer 342-1 and the refractive index of the transparent layer 348-1.

The same applies to the second dummy layer 360B to the fourth dummy layer 360D. In other words, when denoting the refractive index of the second dummy layer 360B as n₃₃, and denoting the refractive index of the second functional member 340-2 as n₃₄, the second dummy layer 360B is adjusted so as to make the absolute values |n₃₁-n₃₃| and |n₃₄-n₃₃| less than or equal to 0.05. In addition, when denoting the refractive index of the third dummy layer 360C as n₃₅, and denoting the refractive index of the third functional member 340-3 as n₃₆, the third dummy layer 360C is adjusted so as to make the absolute values |n₃₄-n₃₅| and |n₃₆-n₃₅| less than or equal to 0.05. In addition, when denoting the refractive index of the fourth dummy layer 360D as n₃₇, the fourth dummy layer 360D is adjusted so as to make an absolute value |n₃₆-n₃₇| less than or equal to 0.05.

In the case where the enclosing layer 330 is configured in this way, each boundary between each functional member 340 and each dummy layer 360 adjacent thereto can be made less noticeable. Therefore, the design of the third laminated glass 300 can be improved significantly.

In particular, the first dummy layer 360A may be made of a material similar to that of the transparent layer 348-1 of the first functional member 340-1. Similarly, the second dummy layer 360B may be made of a material similar to that of the transparent layer 348-1 of the first functional member 340-1 and/or that of the transparent layer 348-2 of the second functional member 340-2. Further, the third dummy layer 360C may be made of the same material as that of the transparent layer 348-2 of the second functional member 340-2 and/or the transparent layer 348-3 of the third functional member 340-3. Further, the fourth dummy layer 360D may be made of a material similar to that of transparent layer 348-3 of the third functional member 340-3.

In the case where at least one of these conditions is satisfied, the boundary between the functional member 340 and the dummy layer becomes even less noticeable, and the design of the third laminated glass 300 can be improved further.

The third laminated glass 300 can be manufactured by a method similar to the first method or the second method described above. However, it should be noted that in the third laminated glass 300, a combination of the protective layer 342, the light-emitting element 345, and the transparent layer 348 is used as the functional member 340.

### (Constituent members of third laminated glass)

Next, members forming the third laminated glass 300 will be further described in detail. However, for each constituent member of the third laminated glass 300 except for the functional member 340, the above description can be referred to. Therefore, here, the functional member 340 will be described.

### (Functional member 340)

Each functional member 340 includes the light-emitting element 345 and the transparent layer 348.

The type of light-emitting element 345 is not limited in particular. The light-emitting element 345 may be, for example, an LED.

In this case, each light-emitting element 345 may include two or more LEDs. For example, in the case where the light-emitting element 345 includes three LEDs, i.e., a red-color LED, a green-color LED, and a blue-color LED, a set of LEDs of the three colors can form one pixel. Therefore, a laminated glass displaying a full color image is obtained.

It is favorable that the LED is a small-size LED that is commonly called a mini LED.

Note that in the case where the functional member 340 includes the light-emitting element 345, it is necessary to arrange a wire 345X or the like for driving the light-emitting element 345 in the enclosing layer 330. However, the configuration of such a wire 345X or the like would be obvious to a person skilled in the art, and hence, no further description is given here.

The transparent layer 348 included in each functional member 340 may be made of, for example, a transparent resin. In addition, it is favorable that the transparent layer 348 is formed as a film-like resin substrate on which the light-emitting element 345 can be laminated. Note that as such resins, for example, polyester-based resins such as PET and PEN (polyethylene naphthalate), olefin-based resins such as COP and cycloolefin copolymer (COC), cellulose-based resins such as cellulose, acetylcellulose and triacetylcellulose (TAC), imide-based resins such as polyimide (PI), vinyl resins such as polyethylene (PE), polyvinyl chloride (PVC), polystyrene (PS), polyvinyl acetate (PVAC), polyvinyl alcohol (PVA) and polyvinyl butyral (PVB), acrylic resins such as polymethyl methacrylate (PMMA) and ethylene-vinyl acetate copolymer resin (EVA) and resins having a crosslinked skeleton of these, urethane resins, and the like, may be enumerated. In addition, the description described above for the second transparent layer 148 in the first laminated glass 100, the adhesive layer 246 in the second laminated glass 200, and the like can also be referred to.

In addition, the protective layer 342 included in each functional member 340 may be made of, for example, a transparent resin. Note that for such resins, the description described above for the first transparent layer 142 in the first laminated glass 100 and the like can be referred to. In addition, the protective layer 342 may be made of the same resin as the transparent layer 348.

Note that in the third laminated glass 300, it is favorable that the functional member 340 has a thickness within a range of 1 µm to 100 µm. It is more favorable that the thickness is within a range of 5 um to 30 um.

As above, configurations of laminated glass according to one embodiment of the present invention has been described, by taking the first laminated glass 100, the second laminated glass 200, and the third laminated glass 300 as examples.

However, the above configurations are merely examples. A laminated glass according to one embodiment of the present invention may have any form as long as it has a configuration in which a functional member adheres to a dummy layer in the lateral direction in an enclosing layer.

For example, in the first laminated glass 100 illustrated in FIG. 1, the adhesive layer 146 of the functional member 140 may be omitted.

In addition, in the first laminated glass 100, in the enclosing layer 130, the dummy layers 160A and 160B are provided on the respective sides of the sidewalls 150A and 150B of the functional member 140. However, for example, in the case where the functional member 140 is provided on either end side of the first laminated glass 100 in a top view, one of the first dummy layer 160A and the second dummy layer 260B may not be present.

The same applies to the second laminated glass 200 and the third laminated glass 300.

Further, in the above description, methods of manufacturing a laminated glass according to one embodiment of the present invention has been described, by taking the first method and the second method as examples. However, the methods of making a laminated glass according to one embodiment of the present invention may be include other steps.

For example, in the first method, after the functional member 140 is formed at Step S110, the dummy layer 160 is formed on the sidewalls 150A and 150B of the functional member 140 at Step S120, to form the enclosing layer 130.

However, alternatively, after part (characteristic part) of the functional member 140 up to the adhesive layer 146 is formed, the thermoplastic resin may be applied to the sidewalls and the upper surface of the characteristic part. In this case, when the thermoplastic resin is cured, the second transparent layer 148 is formed on the upper surface of the characteristic part, and the dummy layer 160 is formed on the sides of the characteristic part. Therefore, in this method, the functional member 140 and the dummy layer 160 can be completed at one time.

In addition, in the second method, after the characteristic part 232 up to the reflecting layer 244 is formed at Step S210, the thermoplastic resin 255 is arranged so as to adhere to the upper surface of the characteristic part 232, the first sidewall 251A, and the second sidewall 251B at Step S220. In addition, by curing the thermoplastic resin 255, the adhesive layer 246 is formed on the upper surface of the characteristic part 232, and the dummy layer 260 is formed on the sides of the characteristic part 232.

However, instead, the enclosing layer 230 may be formed, by having the functional member 240 formed in advance, and then, having the dummy layer 260 formed on the sidewalls 250A and 250B of the functional member 240.

Other than the above, various changes can be made.

### (Application example of a laminated glass according to one embodiment of the present invention)

A laminated glass according to one embodiment of the present invention can be applied to, for example, a windshield of a vehicle and/or a window glass of a building.

Note that in the case where a laminated glass according to one embodiment of the present invention is applied to a windshield of a vehicle, the first glass plate and/or the second glass plate may be planar or may be curved.

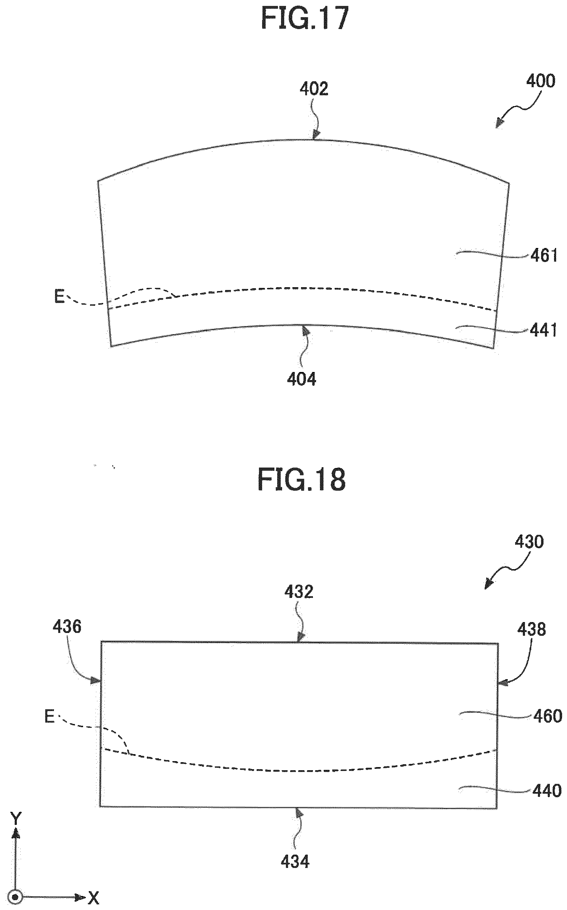

FIG. 17 schematically illustrates a top view of a windshield of a vehicle to which a laminated glass according to one embodiment of the present invention is applied.

A windshield 400 is configured to have an enclosing layer interposed between a first interlayer of a first glass plate and a second interlayer of a second glass plate. Note that the enclosing layer may include a screen member such as the functional members 140 and 240 described above.

As illustrated in FIG. 17, the windshield 400 has an upper edge 402 and a lower edge 404. The length of the upper edge 402 is longer than that of the lower edge 404. Note that although not clear from FIG. 17, the windshield 400 has a first glass plate and a second glass plate that have curved shapes, and has a convex form that is curved in one of the directions perpendicular to the plane of the paper.

The windshield 400 includes a screen portion 441 formed on the side of the lower edge 404 and a transmissive portion 461 formed on the side of the upper edge 402.

The screen portion 441 can reflect an image projected on the windshield 400. The screen portion 441 has a visible light reflectance of, for example, greater than or equal to 5%. Meanwhile, the transmissive portion 461 has a visible light transmittance of greater than or equal to 30%.

The screen portion 441 is located at a position of a functional member (e.g., the functional member 140 or the functional member 240) in a laminated glass according to one embodiment of the present invention. In addition, the transmissive portion 461 is located at a position of a dummy layer (e.g., the dummy layer 160 or the dummy layer 260) in a laminated glass according to one embodiment of the present invention.

Therefore, in the windshield 400, a boundary E between the screen portion 441 and the transmissive portion 461 can be made less visible.

Note that in the case of manufacturing such a windshield 400, it is favorable that an enclosing layer is provided in a form as illustrated in FIG. 18.

FIG. 18 schematically illustrates a top view of an enclosing layer before it is arranged between two glass plates.

As illustrated in FIG. 18, an enclosing layer 430 at this stage has a film-like form that includes an upper edge 432, a lower edge 434, and two ends 436 and 438.

The upper edge 432 side of the enclosing layer 430 is formed to be a dummy layer 460, and the lower edge 434 side is formed to be a screen member 440.

Note that in FIG. 18, a boundary E between the dummy layer 460 and the screen member 440 is indicated by a broken line. However, in practice, this boundary E is not clear.

Here, the screen member 440 is configured to have a greater width (dimension in the Y direction) at the ends 436 and 438 than at the center. Conversely, the dummy layer 460 is configured to have a smaller width (dimension in the Y direction) at the ends 436 and 438 than at the center.

As described above, the glass plates of the windshield 400 has curved surface shapes.
Therefore, in the case where an enclosing layer whose screen member has a uniform width is arranged between the two glass plates, wrinkles may appear in the enclosing layer due to a dimensional difference between the upper edge 402 and the lower edge 404.

However, in the case where the enclosing layer 430 is provided, as a film having dimensions as illustrated in FIG. 18, the dimensional difference between the upper edge 402 and the lower edge 404 can be offset when the enclosing layer 430 is arranged between the two glass plates. Therefore, appearance of wrinkles in the enclosing layer 430 can be significantly suppressed.

Note that in the example described above, a configuration of a windshield has been described, to which the first laminated glass 100 or the second laminated glass 200 having the screen member is applied.

However, alternatively, the third laminated glass 300 described above may be applied to form a windshield. In this case, a windshield capable of displaying an image can be provided without providing an external device such as a projector.

The present application claims priority to Japanese Laid-Open Patent Application No. 2020-168527, filed on October 5, 2020, the entire contents of which are incorporated herein by reference.

### [List of Reference Numerals]

100 first laminated glass
110 first glass plate
115 first interlayer
120 second glass plate
125 second interlayer
130 enclosing layer
140 functional member
142 first transparent layer
144 reflecting layer
146 adhesive layer
148 second transparent layer
150A first sidewall
150B second sidewall
152 uneven surface
154 uneven surface of reflecting layer
156 uneven surface of adhesive layer
160 dummy layer
160A first dummy layer
160B second dummy layer
170 support base material
180 assembly
185 intermediate product
200 second laminated glass
210 first glass plate
215 first interlayer
220 second glass plate
225 second interlayer
230 enclosing layer
232 characteristic part
240 functional member
242 first transparent layer
244 reflecting layer
246 adhesive layer
250A first sidewall
250B second sidewall
251A first sidewall
251B second sidewall
252 uneven surface
254 uneven surface of reflecting layer
255 thermoplastic resin
260 dummy layer
260A first dummy layer
260B second dummy layer
300 third laminated glass
310 first glass plate
315 first interlayer
320 second glass plate
325 second interlayer
330 enclosing layer
340 (340-1 to 340-3) functional member
342 (342-1 to 342-3) protective layer
345 (345-1 to 345-3) light-emitting element
345X wire
348 (348-1 to 348-3) transparent layer
350-1A first sidewall
350-1B second sidewall
360 dummy layer
360A first dummy layer
360B second dummy layer
360C third dummy layer
360D fourth dummy layer
400 windshield
402 upper edge
404 lower edge
430 enclosing layer
432 upper edge
434 lower edge
436, 438 end
441 screen portion
461 transmissive portion
440 screen member
460 dummy layer
E, E1, E2 boundary

## Claims

1. A laminated glass comprising:
a first glass plate; and
a second glass plate,
wherein a first interlayer is arranged on the first glass plate,
wherein a second interlayer is arranged on the second glass plate,
wherein the first glass plate and the second glass plate are arranged so as to have the first interlayer and the second interlayer face each other,
wherein an enclosing layer is arranged between the first interlayer and the second interlayer,
wherein the enclosing layer includes a functional member having a sidewall, and a dummy layer arranged on the sidewall of the functional member, the functional member including one or more transparent layers,
wherein the functional member has a thickness of 200 µm at a maximum,
wherein the dummy layer is made of a thermoplastic resin, and
wherein, when denoting an average refractive index of the transparent layers included in the functional member as n_{A}, and denoting a refractive index of the dummy layer as n_{B}, a difference Δn of the refractive indices expressed by an absolute value |n_{A}-n_{B}| is less than or equal to 0.05.

2. The laminated glass as claimed in claim 1, wherein a difference between a thickness of the dummy layer and the thickness of the functional member is within ±5%.

3. The laminated glass as claimed in claim 1 or 2, wherein the dummy layer has a visible light transmittance of greater than or equal to 30%.

4. The laminated glass as claimed in any one of claims 1 to 3, wherein the functional member is a screen member, and includes a reflecting layer.

5. The laminated glass as claimed in claim 4, wherein the functional member includes a first transparent layer, the reflecting layer, and an adhesive layer from a side closer to the first interlayer, and
wherein the dummy layer is made of a same material as that of the adhesive layer.

6. The laminated glass as claimed in claim 4, wherein the functional member includes a first transparent layer, the reflecting layer, an adhesive layer, and a second transparent layer from a side closer to the first interlayer, and
wherein the dummy layer is made of a same material as that of the second transparent layer.

7. The laminated glass as claimed in claim 1 or 2, wherein the functional member includes a light-emitting element.

8. The laminated glass as claimed in any one of claims 1 to 7, wherein an adhesion force between the dummy layer and the first interlayer is greater than or equal to 4 N/25-mm width, and/or an adhesion force between the dummy layer and the second interlayer is greater than or equal to 4 N/25-mm width.

9. The laminated glass as claimed in any one of claims 1 to 8, wherein the laminated glass is a windshield of a vehicle.
